Europäisches Patentamt

European Patent Office

Office européen des brevets

(11) Veröffentlichungsnummer: **0 169 353**

**A2**

## (12) EUROPÄISCHE PATENTANMELDUNG

(21) Anmeldenummer: **85106873.4**

(22) Anmeldetag: **04.06.85**

(51) Int. Cl.⁴: **G 11 B 23/00**
**G 11 B 23/04**

(30) Priorität: **19.07.84 DE 3426590**
**24.08.84 DE 3431124**

(43) Veröffentlichungstag der Anmeldung:
**29.01.86 Patentblatt 86/5**

(84) Benannte Vertragsstaaten:
**AT BE CH DE FR GB IT LI LU NL SE**

(71) Anmelder: **Barnowsky, Reinhard**
**Roonstrasse 30**
**D-5160 Düren(DE)**

(72) Erfinder: **Barnowsky, Reinhard**
**Roonstrasse 30**
**D-5160 Düren(DE)**

(74) Vertreter: **Liermann, Manfred**
**Josef-Schregel-Strasse 19**
**D-5160 Düren(DE)**

(54) **Vorrichtung zum Schutz von Video-Recordern vor unbefugter Benutzung.**

(57) Bei einer Vorrichtung zum Schutze von Video-Recordern vor unbefugter Benutzung wird ein Halter vorgesehen, der in das Cassettenfach des Recorders einführbar und darin bei mindestens teilweiser Öffnungsstellung ver- und entriegelbar ist. Der Halter entspricht in seinen äußeren Abmessungen vorzugsweise einer Videocassette und weist eine Verriegelung auf, die am Halter selbst angreift. Die Verriegelung greift in der Verriegelungsstellung unter eine um die Längsseite der Cassette schwenkbare Klappe, die geöffnet wird, wenn die Cassette in das Cassettenfach eines Recorders eingeführt wird. Die Verriegelung verhindert das Schließen der Klappe und ist in einer Spulenkammer der Cassette fest und unlösbar angeordnet. Die Verriegelung weist einen Stößel auf, der durch ein Schloß betätigt wird und gesichert ist und in seiner Verriegelungsstellung unter die geöffnete Klappe greift. Geeignet ist auch ein im Halter in Einschubrichtung verlaufendes, drehbar angeordnetes Element, dessen hinteres Ende abgewinkelt ist, wobei die Abwinklung mit einer Drehbewegung hinter einen hinteren Anschlagrand des Cassettenfachs gedreht und mindestens in dieser Stellung verriegelt und entriegelt werden kann. Die Klappe selbst ist dann zur Erzielung der Sperrwirkung nicht mehr erforderlich.

. Fig 5

## Vorrichtung zum Schutze von Video-Recordern

Die vorliegende Erfindung betrifft eine Vorrichtung zum Schutze von Video-Recordern vor unbefugter Benutzung. Mit dem Einzug von Videogeräten in eine täglich größer werdende Zahl von Haushalten und mit der immer größer werdenden Möglichkeit des Entleihens von bespielten Videobändern wuchs gleichzeitig die Gefahr des Mißbrauchs von diesen Einrichtungen, insbesondere durch Jugendliche. Immer öfter hörte man deshalb in der letzten Zeit den Ruf von verantwortlichen Erziehern, die danach verlangten, daß Minderjährige von der Benutzung von Videobändern ausgeschlossen werden, denen sie geistig nicht gewachsen sind und die unter Umständen eine Gefährdung für diese Minderjährigen darstellen. Während auf der einen Seite versucht wurde mit Hilfe des Jugendschutzgesetzes den Minderjährigen den Zugang zu jungendgefährdenden Videoinhalten vorzuenthalten, mußte man recht bald erkennen, daß eine wirksame Kontrolle nicht immer und überall möglich war. Die Unmöglichkeit stellte sich selbst bei wohlwollender Mitwirkung der Erziehungsberechtigten ein, denn sobald die Minderjährigen unbeaufsichtigt waren, wußten sie sich stets Zugang zu verbotenen Bändern und Videogeräten zu verschaffen.

Die Forderung wurde deshalb an die Industrie herangetragen Videogeräte zu schaffen, die vor unbefugter Benutzung gesichert werden könnten. Als Antwort auf diese Forderung wurden zunächst elektronische Schlösser entwickelt, die als Teile der Elektronik eines Videogeräts ausgebildet waren bzw. in dessen Elektronik integriert wurden, so daß die Bedienung des Videogerätes nur nach Öffnung des elektronischen Schlosses möglich wurde. Neben den elektronischen Schlössern gab es eine Vielzahl von anderen Einrichtungen bis hin zu Vorhängeschlössern, mit denen man das Cassettenfach des Videogerätes abschloß. Aber auch solche Einrichtungen waren der Findigkeit von neugierigen Minderjährigen nicht gewachsen, so daß sie allesamt keine Sicherheit vor unbefugter Benutzung boten. Insbesondere konnten mit diesen Maßnahmen nicht die bereits vorhandenen Geräte unbenützbar gemacht werden.

Daraus ergab sich die Aufgabe eine Einrichtung zu schaffen, mit der Videogeräte, insbesondere Video-Recorder, vor unbefugter Benutzung wirksam geschützt werden können. Daneben sollte eine solche Einrichtung besonders preisgünstig sein und wirksam sein, ohne an vorhandenen Videogeräten etwas zu ändern.

Als Lösung dieser Aufgabe wird ein Halter vorgeschlagen, der in das Cassettenfach des Recorders einführbar ist und darin bei mindestens teilweiser Öffnungsstellung des Cassettenfaches ver- und entriegelbar ist. Dabei geht die Erfindung von der Überlegung aus, daß die überwiegende Mehrzahl der Video-Recorder ein sogen. Cassettenfach aufweist, welches zum Einlegen bzw. Herausnehmen der Videocassette geöffnet bzw. geschlossen wird und in seiner Schließstellung nahezu vollständig in das Gehäuse des Vide-Recorders integriert ist. In diesem Zusammenhang ist es besonders wichtig, daß der erfindungsgemäße Halter bereits bei teilweiser Öffnung des Cassettenfaches darin ver- und entriegelbar ist und zwar nicht nur in der vollständigen Öffnungsstellung des Cassettenfaches. Damit wird gewährleistet, daß bei jeder Stellung des Cassettenfaches eine ungewollte bzw. unbefugte Entnahme des einmal darin verriegelten Halters unmöglich gemacht wird.

Der im Cassettenfach befindliche und dort verriegelte Halter besetzt das Cassettenfach und macht damit den Einsatz einer Video-Cassette unmöglich. Das Gerät ist somit vollständig unbenutzbar solange der Halter sich im Cassettenfach befindet und dort verriegelt ist.

Nach einem weiteren Merkmal weist der Halter wenigstens die äußeren Abmessungen einer Videocassette auf und hat auch deren Ausnehmungen, über die die Cassette mit den Betätigungsorganen des Video-Recorders zum Abspielen des Bandes notwendigerweise in Verbindung tritt. Von besonderer Bedeutung in diesem Zusammenhang ist es, daß der Halter eine Verriegelung aufweist, die an ihm selbst und nicht etwa an dem jeweiligen Video-Recorder angreift. Auf diese Weise ist gewährleistet, daß zum wirksamen Verriegeln des erfindungsgemäßen Halters in einem Video-Recorder beliebiger Bauart keine Veränderungen erforderlich werden. Auch kann der Halter dabei so einfach und preisgünstig ausgeführt werden, daß sein Herstellungspreis in der Größenordnung des Preises einer nomalen Videocassette liegt.

Besonders einfach ist die Ausführung des erfindungsgemäßen Halters als Videocassette, wobei sich die Erfindung die Tatsache zunutze macht, daß handelsübliche Videocassetten eine schwenkbare Klappe aufweisen, die vor das über eine der Längsseiten der Cassette herumgeführte Videoband schwenkbar ist, und dieses Band schützt. Die Klappe ist üblicherweise in den einander entsprechenden Ecken der einander gegenüberliegenden schmalen Stirnseiten der Cassette schwenkbar gelagert und wird selbst über eine Verriegelung betätigt, die sicherstellt, daß sich die Klappe vor dem Band befindet, sobald die Cassette aus dem Recorder entnommen ist und nur aus ihrer Schutzstellung herausschwenkt, wenn die Cassette in den Recorder eingeführt wurde. Die Video-Recorder sind daher so eingerichtet, daß die Schutzklappe vor dem Band sich innerhalb des Video-Recorders öffnet und sich automatisch wieder schließt, sobald die Cassette aus dem Recorder herausgezogen wird. Dazu weisen die Cassetten einen einfachen Verriegelungsmechanismus an einer der Stirnseiten auf, der beim Einschieben der Cassette die Schutzklappe entriegelt und beim Herausnehmen der Cassette wieder einrastet, wenn sich die Klappe bei der Entnahme der Cassette aus dem Recorder wieder schützend vor das Band legt. Somit weisen die Video-Recorder Einrichtungen auf, die gewährleisten, daß die Schutzklappe immer vor das Band gelegt ist, wenn die Cassette entnommen wird und daß die Cassette ohne das Schließen der Schutzklappe überhaupt nicht aus dem Recorder entnommen werden könnte. Diese Wirkungsweise von Video-Recorder und Cassette macht sich die vorliegende Erfindung zunutze, in dem sie vorsieht, daß die geöffnete Klappe der in einen Recorder eingeführten Cassette in dieser Stellung aus der Cassette heraus verriegelt wird, so daß es unmöglich wird, die Cassette wieder aus dem Recorder zu entnehmen, ohne die Schutzklappe zu entriegeln.

Als eine recht preisgünstige und einfache Ausführungsform der Erfindung wird eine Videocassette vorgesehen, aus der das Videoband entfernt ist, so daß nur noch das Gehäuse vorliegt. Damit wird gleichzeitig Platz geschaffen, zur Aufnahme der erfindungsgemäßen Verriegelung in einer der leeren Spulenkammern der Cassette. Die Verriegelung wird dort fest und unlösbar angeordnet.

Nach einem weiteren Merkmal wird die Verriegelung als Stößel ausgebildet, dessen eines, inneres Ende in der Verlängerung des Schließkanals eines Schlosses und dessen äußeres Ende in der der Klappe benachbarten Längsseite der Cassette längsverschieblich und in seinen jeweiligen Endstellungen feststellbar geführt ist. Ein derartig ausgebildeter Stößel verläuft also in seiner Richtung quer zur leeren Cassette, wobei das außenseitige Ende des Stößels der Einfachheit halber in der Längswand der Cassette geführt ist und eine weitere Führung des inneren Endes des Stößels z. B.durch eine Verlängerung des Schließkanals eines Schlosses gewährleistet werden kann, in den ein Schlüssel eingeführt werden kann. Eine derartige Ausbildung kann recht preisgünstig erstellt werden. Es genügt hier beispielsweise Schloß und Stößel aus Kunststoff auszuführen, dem gleichen Material, woraus auch die Cassette besteht. Durch entsprechende Ausbildung des Schließkanals des Schlosses kann bereits mit sehr einfachen Mitteln das Einführen von Gegenständen verhindert werden, womit der Stößel betätigt werden kann. Als besonders sicher hat sich aber eine Ausbildung des Schlosses als schlüsselbetätigtes Zylinderschloß herausgestellt, dessen Verriegelungskörper am inneren Ende des Stößels angreift und ihn in die gewünschte Ver- und Entriegelungsstellung bringt.

Eine besonders einfache Konstruktion des Verriegelungsmechanismus ergibt sich, wenn der Stößel auf
einer Rückholfeder abgestützt ist. Durch diese Ausbildung ist gewährleistet, daß der Schlüssel bzw. das
schlüsselbetätigte Zylinderschloß aus dem Schließkanal
des Schlosses entfernt werden kann, wobei der Stößel
von der Wirkung der Kraft der Rückholfeder jeweils in
die Entriegelungsstellung geschoben wird.

Eine weitere Lösungsmöglichkeit nach der Erfindung,
die abstellt auf ein Cassettenfach mit hinterem
Anschlagrand für eine Videocassette sieht vor, daß der
Halter mindestens ein in Einschubrichtung verlaufendes, drehbar angeordnetes Element trägt, dessen
hinteres Ende abgewinkelt ist, wobei die Abwinklung
mit einer Drehbewegung hinter den hinteren Anschlagrand gedreht und mindestens in dieser Stellung
verriegelt und entriegelt werden kann. Hierdurch kann
der Halter ebenfalls im Cassettenfach festgehalten
werden und ist in dieser Stellung verschlossen, so daß
das Cassettenfach unbenutzbar ist.

Nach einer Ausgestaltung dieser Lösung ist vorgeschlagen, daß das drehbar angeordnete Element als Stab
ausgebildet ist, dessen hinteres Ende abgewinkelt und
abgeflacht ist, der mit einem drehbaren Teil eines
Zylinderschlosses verbunden ist, dessen stillstehender
Teil im Halter angeordnet und von vorne zugänglich
ist. Die stabförmige Ausbildung, vorzugsweise in der
Form eines Rundstabs, ist besonders einfach herstellbar und leicht in einem solchen Halter unterzubringen.
Die Verbindung mit dem drehbaren Teil eines beispielsweise Zylinderschlosses ist ebenfalls leicht herstellbar. In dem Halter ist dann das Zylinderschloß untergebracht, das schlüsselbetätigt ist. Der Schlüssel dreht das drehbare Teil des Zylinderschlosses und damit auch den abgewinkelten Stab, so daß der abgewinkelte Teil, der über den Halter genügend weit übersteht, hinter den hinteren Anschlagrand des Cassettenfachs gedreht werden und in dieser Stellung abgeschlossen werden kann. Ein Entfernen des Halters aus dem Cassettenfach ist damit nicht mehr möglich. Nur der Besitzer des Schlüssels kann das Zylinderschloß entriegeln und den abgewinkelten Stab beispielsweise um 90° verdrehen, so daß die Abwinklung den hinteren Anschlagrand des Cassettenfachs nicht mehr übergreift. In dieser Drehstellung kann dann der Halter wieder aus dem Cassettenfach entfernt werden.

Es ist schließlich nach einer weiteren Ausgestaltung noch vorgesehen, daß der Halter im wesentlichen als Videocassette (Leercassette) ausgebildet ist, in welcher mindestens der genannte Stab drehbar, aber axial unverschiebbar gelagert ist, wobei dieser Stab durch entsprechende Aussparungen vorhandener Bauteile hindurch genügend weit übersteht, um mit seinem abgewinkelten Ende hinter den hinteren Anschlagrand des Cassetteneinschubfaches greifen zu können, wobei das Cassettengehäuse die notwendigen Aussparungen aufweist, in welche die den automatischen Einzug bewirkenden Abtastelemente wirkungslos eintauchen können. Dies ist eine besonders einfache Lösung und macht es möglich Leercassetten zu verwenden. Die hintere Schutzklappe, die bei solchen Cassetten üblicherweise vorhanden ist, muß hierbei nicht mehr als Sperrelement benutzt werden. Sie kann völlig entfallen. Insbesondere bei der Anwendung in sogen. Frontladern ist es erforderlich, daß der als Video- cassette ausgebildete Halter Aussparungen aufweist, in welche die bei solchen Geräten vorhandenen Abtastelemente wirkungslos eintauchen können. Andernfalls sorgen diese Abtastelemente dafür, daß die eingesetzte Leercassette automatisch eingezogen und abgesenkt wird. Ein Abschließen dieser Cassette ist dann nicht mehr möglich.

An schlüsselbetätigten Zylinderschlössern gibt es eine Vielzahl von Ausführungsmöglichkeiten, an deren Eignung im Zusammenhang mit der vorliegenden Erfindung keine besonderen Anforderungen gestellt werden.

Nachfolgend wird die Erfindung anhand eines Ausführungsbeispiels näher beschrieben. Es zeigen in vereinfachter schematischer Darstellung die

Figur 1 die Hälfte einer Videocassette in Draufsicht in Richtung des Pfeiles I,

Figur 2 die Seitenansicht der Hälfte einer Videocassette in Richtung des Pfeiles II und

Figur 3 einen Querschnitt durch eine Videocassette entlang der Linie III-III der Figur 1.

Figur 4 Darstellung wie Figur 1, jedoch mit veränderter Verriegelungskonstruktion Figur 5 Schnitt entlang der Linie IV-IV nach Figur 4

Der erfindungsgemäße Halter zum Schutze eines Video-Recorders vor unbefugter Benutzung besteht beispielsweise aus einer Videocassete 1, woraus das Videoband entnommen ist. Das Gehäuse der Cassette 1 wird aus zwei Hälften 2 und 3 gebildet, die wie Schalen aufeinandergeklappt sind. Die beiden Schalen 2 und 3 sind an mehreren Stellen mit Schrauben 4 fest miteinander verbunden. Die beiden Schalen 2 und 3 werden von jeweils zwei Stirnseiten 5 und 6 und zwei Längsseiten 7 und 8 begrenzt, wobei insbesondere die Längsseite 8 Öffnungen 9 zum Aus- und Einführen eines Videobandes (nicht gezeigt) und Ausnehmungen 10 sowie Stützflächen 11 aufweist, über die das Videoband geführt wird. Die Seitenwände 5, 6, 7 und 8 umschließen die beiden Spulenkammern 12 und 13, die zur Aufnahme und Führung von je einer Spule (nicht gezeigt) dienen, auf der das Videoband aufgerollt ist. Auf wenigstens einer der Hälften 2 oder 3 weisen die Spulenkammern 12 und 13 Öffnungen 14 und 15 auf, über die die Mitnehmer des Video-Recorders zum Transport des Videobandes in die Spulenkammern 12 und 13 eingreifen. Diese Merkmale sind jedoch nur dann vorhanden, wenn eine Video-Leercassette verwendet wird.

An einander entsprechenden Ecken der Stirnseiten 5 und 6 ist eine Klappe 16 in Scharnieren 17 schwenkbar gelagert, und zwar so, daß sie in ihrer unteren Stellung, d.h. der Schließstellung, die gesamte Längsseite 8 der Cassette vollständig abdeckt. Bei geschlossener Klappe 16 ist gewährleistet, daß ein über die Längsseite 8 herum geführtes Videoband, wenn vorhanden, durch die heruntergeklappte Klappe 16 vor Einwirkungen geschützt ist.

In ihrer Schließstellung (nicht gezeigt) wird die Klappe 16 durch einen kleinen Mechanismus verriegelt, der an einer der Hälften 2 oder 3 der Cassette vorgesehen ist. Zur Verriegelung der Klappe 16 ist dementsprechend eine kleine Klappe 18 vorgesehen, die in einem Vorsprung 19 der Hälfte 2 um eine Achse 20, parallel zur Stirnseite 6 schwenkbar gelagert ist. Eine kleine Rückholfeder 21, die um die Achse 20 herumgeschlungen ist und sich an einer Wand 22 des Vorsprungs 19 abstützt, gewährleistet, daß sich die Klappe 18 immer in ihrer Schließstellung befindet. Die Klappe 18 weist Nocken 23 und 24 auf, die durch die Stirnseite 6 hindurchgreifen und zur Ver- und Entriegelung der Schutzklappe 16 dienen. Der Nocken 24 greift beispielsweise in eine Ausnehmung (nicht gezeigt) in der Wange 25 der Schutzklappe 16 ein, über die die Schutzklappe 16 mit ihren Scharnieren 17 jeweils verbunden ist. Die Schutzklappe 16 wird in ihrer Schließstellung durch den Nocken 24 verriegelt, der dabei von der Wange 25 vollständig bedeckt wird. Der daneben liegende Nocken 23 bleibt dagegen frei und er wird niedergedrückt, sobald die Cassette 1 in das Cassettenfach 26 eines Video-Recorders eingeführt wird. Dem niedergedrückten Nocken 23 folgt der Nocken 24, da ja beide auf der gleichen Klappe 18 befestigt sind und gibt die Verriegelung der Schutzklappe 16 frei, so daß diese durch das Einführen der Cassette 1 in das Cassettenfach 26 des Recorders aus ihrer Schließ- in die Öffnungsstellung überführt wird. Damit wird das Videoband frei und kann abgespielt werden.

Das Cassettenfach 26 ist in geeigneter Weise so ausgebildet, daß sowohl das Öffnen als auch das Schließen der Schutzklappe 16 beim Einlegen bzw. Herausnehmen der Cassette 1 aus dem Cassettenfach 26 gewährleistet ist, wobei zur Öffnung der Klappe 16 der Verriegelungsmechanismus der Klappe 18 durch den Recorder entsperrt wird und beim Herausnehmen der Cassette aus dem Cassettenfach dafür gesorgt ist, daß sich die Klappe 16 wieder schützend vor das Videoband legt. Man kann also die Cassette 1 nicht aus dem Videofach 26 entnehmen, ohne daß dabei gleichzeitig die Klappe 16 in ihre Schutzstellung gelangt. Mit den Mitteln der vorliegenden Erfindung wird die Einnahme der Schutzstellung der Klappe 16 behindert. Damit wird es gleichzeitig unmöglich, die Cassette 1 aus dem Cassettenfach 26 zu entfernen, weil die geöffnete Klappe 16 nicht durch den Einschubkanal des Cassettenfachs hindurchpaßt

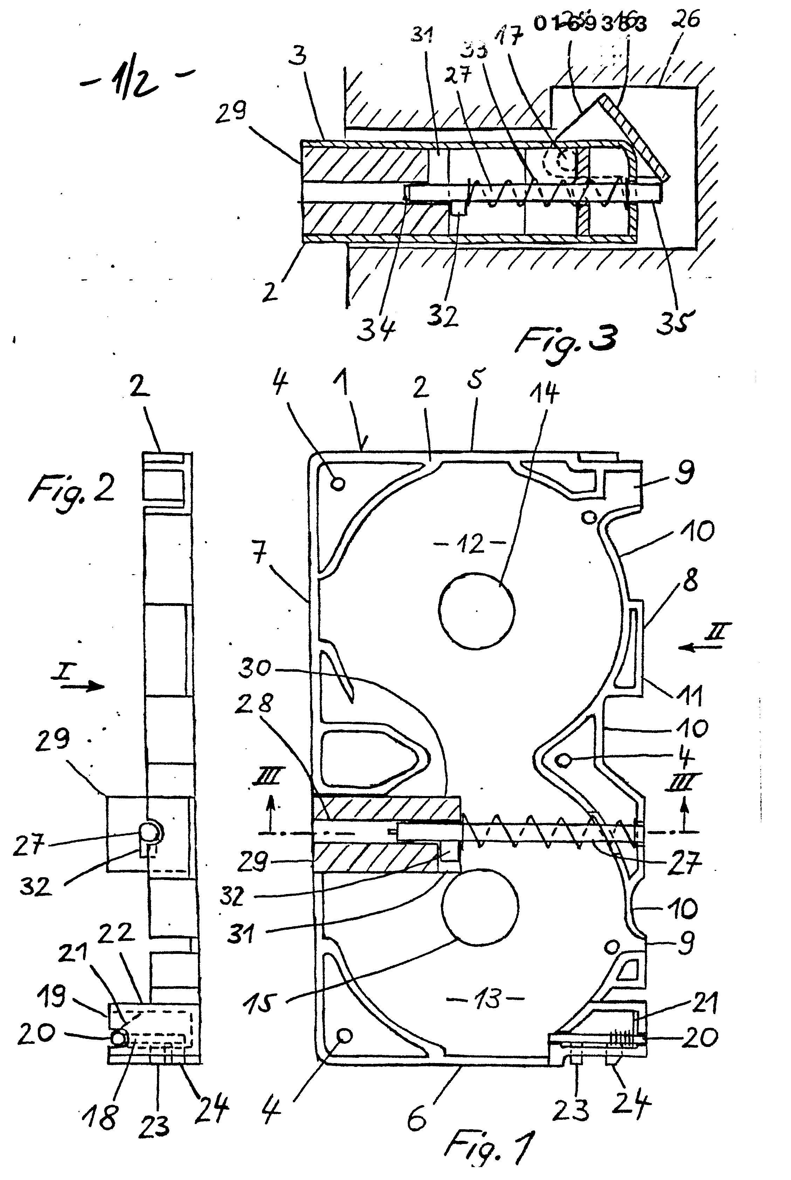

Die Cassette 1 ist mit einem Stößel 27 versehen, der sich parallel zu den Stirnseiten 5 und 6 erstreckt. Das vordere Ende des Stößels 27 ist in der Stirnwand 8 und das innere Ende des Stößels 27 im Schließkanal 28 eines Schlosses 29 gelagert. Das Schloß 29 ist als prismatischer Kunststoffkörper ausgeführt, der innerhalb einer der Spulenkammern, im vorliegenden Falle der Spulenkammer 13 der Cassette 1 fest angeordnet ist. An seinem inneren Ende 30 weist der Körper des Schlosses 29 eine Ausnehmung 31 auf, in welche ein Zapfen 32 des Stößels 27 eingreift, wenn sich dieser in seiner zurückgezogenen Stellung befindet, in die er durch eine Rückholfeder 33 gebracht wird. Die zurückgezogene Stellung des Stößels 27 ist beispielsweise in der Figur 1 gezeigt.

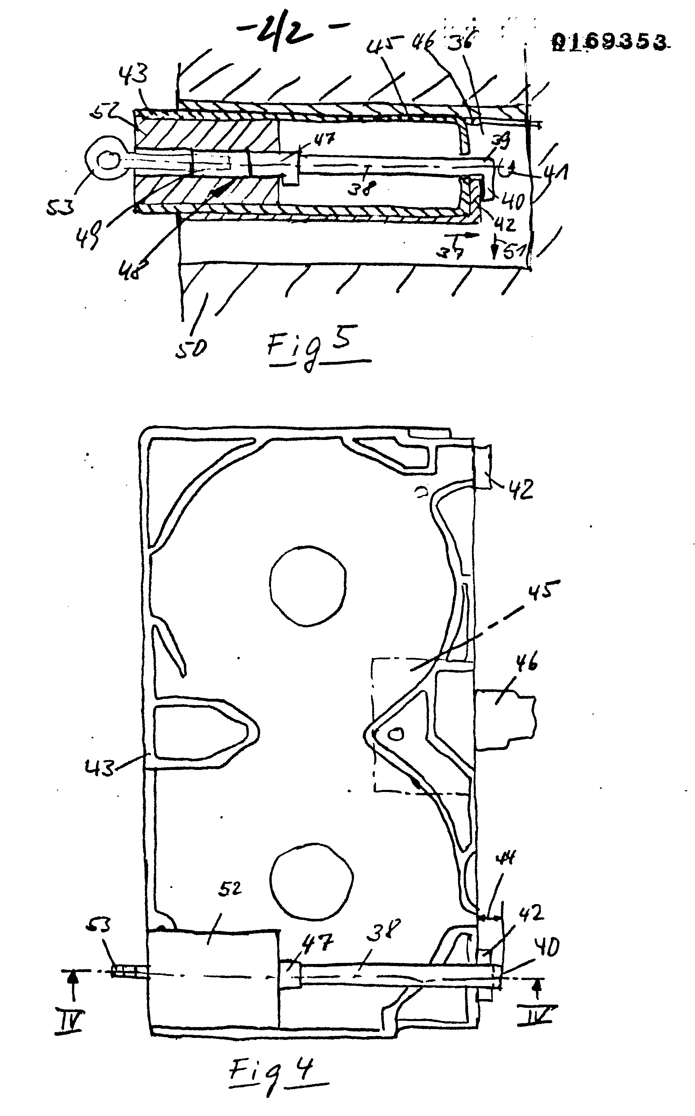

In seiner Verriegelstellung, die in der Figur 3 dargestellt ist, ist der Stößel 27 um seine Längsachse gedreht, wobei die Rückholfeder 33 vorgespannt wird und der Zapfen 32 an der inneren Stirnseite des Schlosses 29 zur Anlage kommt. Zur Drehung in die Verriegelungsstellung sowie zur Entriegelung weist der Stößel 27 eine kleine Nase 34 auf, woran der in den Schloßkanal 28 eingeführte Schlüssel angreift um den Stößel 27 in die Ver- und Entriegelungsstellung zu überführen. In der Verriegelungsstellung entsprechend der Figur 3 greift das vordere Ende 35 des Stößels 27 unter die geöffnete Schutzklappe 26 und verhindert so deren Zurückschwenken in die Schutzstellung. Die Behinderung der Schwenkbewegung der Klappe bewirkt ihrerseits, daß die Cassette 1 aus dem Cassettenfach 26 nicht entfernt werden kann. Damit wird verhindert, daß eine neue Videocassette in den Recorder eingeführt und unbefugt abgespielt werden kann.

Das Schloß 29, welches in der Cassette 1 fest und unlösbar angebracht ist, besteht ebenso wie die Cassettenschalen 2 und 3 aus Kunststoff. Diese Kunststoffteile lassen sich bekanntlich durch einfaches Verkleben oder Verschweißen dauerhaft und fest miteinander verbinden, können aber auch einstückig ausgebildet sein. Der Stößel 27 kann vorzugsweise ebenfalls auch aus Kunststoff gefertigt sein. Daneben aber sind auch Lösungen möglich, bei denen der Stößel 27 aus Metall hergestellt ist. Sofern sich der Körper des Schlosses 29 für die Aufnahme eines metallischen Schließzylinders im Schließkanal 28 nicht ausreichend eignet, kann selbstverständlich auch der Körper des Schlosses 29 aus Metall hergestellt sein.

Das Schloß mit dem der Stößel 27 in Schließstellung gebracht wird, sollte in Schließstellung im Schließkanal 28 fixiert sein, damit in Schließstellung eine unbefugte Manipulation des Stößels 27 unmöglich ist.

Die Verwendung einer Leercassette ist eine vorteilhafte Ausführungsform. Grundsätzlich aber ist jede Einrichtung geeignet, die in das Cassettenfach eingesetzt und in eingesetzter Stellung in ihrer Form so veränderbar ist, daß eine Entnahme nicht mehr möglich ist ohne Rückveränderung dieser Form. Die Einrichtungen zur Formveränderung müssen verschließbar sein.

Eine weitere besonders günstige Ausführungsform, die ebenfalls eine Leercassette günstig verwenden kann, ist noch in den Figuren 4 und 5 dargestellt. Ein nur schematisch angedeutetes Viedogerät 50 sei beispielsweise als sogen. Frontlader ausgebildet. Dieser Frontlader weist ein Cassettenfach 36 auf, in welches eine Videocassette 43 eingesetzt werden kann. Das Cassettenfach 36 weist hierbei hinten und im Inneren einen Anschlagrand 42 auf, der in der Regel lediglich aus zwei hochgewinkelten Laschen besteht. Wird die Videocassette 43 bis gegen diesen Anschlagrand 42 in das Cassettenfach 36 eingeschoben, so wird dies von einem Abtastelement 46 erfühlt, das dafür sorgt, daß das Cassettenfach 36 zunächst in Einschubrichtung 37 automatisch eingezogen und anschließend in Richtung des Pfeiles 51 abgesenkt wird. Dieser automatische Vorgang ist jedoch unerwünscht dann, wenn das Cassettenfach 36 unbenutzbar gemacht werden soll. Daher weist die eingeschobene Leercassette 43 an ihrer Oberseite mindestens eine Aussparung 45 auf, in welchen die Abtastelemente 46 wirkungslos eintauchen können, wenn die Cassette 43 in das Cassettenfach 36 bis an den hinteren Anschlagrand 42 eingeschoben ist. Es liegt dann etwa eine Situation vor, wie sie in Figur 5 dargestellt ist.

Etwa in der Höhe, in welcher die den hinteren Anschlagrand 42 bildenden Abwinklungen am Cassettenfach 36 vorgesehen sind, ist in das Cassettengehäuse 43 ein Halter 52 eingesetzt, der eine in Richtung des Pfeiles 37 verlaufende, nicht näher bezeichnete Bohrung für ein Zylinderschloß aufweist. In diese Bohrung ist ein Zylinderschloß 48 eingesetzt derart, daß der stillstehende Teil 49 des Zylinderschlosses 48 im Halter 52 sicher gehalten und der drehbare Teil 47 in geeigneter Weise drehbar geführt ist. Der drehbare Teil 47 des Zylinderschlosses 48 ist mit einer vorzugsweise als Rundstange ausgebildeten Stange 38 verbunden, deren hinteres Ende 39 eine Abwinklung 40 aufweist, die abgeflacht ist. Hierbei weist die Abwicklung 40 einen genügend großen Überstand 44 auf, um sicherzustellen, daß zwischen dem hinteren Ende der Leercassette 43 und der Innenseite der Abflachung der Abwinklung 40 genügend Platz für den hinteren Anschlagrand 42 bleibt. Die solcherart gestaltete Leercassette 43 wird dann in das Cassettenfach 36 in üblicher Weise eingeschoben bis gegen den hinteren Anschlagrand 42, wobei dann die Aussparung 45 dafür sorgt, daß das Abtastelement 46 einen weiteren automatischen Einzug nicht vornimmt. In dieser Stellung wird dann das Zylinderschloß 48 mittels des Schlüssels 53 in die in Figur 5 dargestellte Drehstellung (Drehbewegung 41) gedreht, so daß die abgeflachte Abwinklung 40 den hinteren Anschlagrand 42 so wie in Figur 5 dargestellt, übergreift. Es kann nun der Schlüssel 53 entfernt werden und es ist in dieser Stellung unmöglich die Leercassette 43 wieder aus dem Cassettenfach 36 zu entfernen. Es kann nun wohl noch nach Belieben die Cassette 43 weiter in Richtung des Pfeiles 37 eingeschoben werden, wobei dann, wenn die hintere Stellung erreicht ist, eine automatische Absenkung in Richtung des Pfeiles 51 erfolgt. Ein Rückfahren der Cassette 43 in die in Figur 5 dargestellte Stellung kann in üblicher Weise erfolgen.

Um die Leercassette 43 wieder zu entnehmen muß mittels des Schlüssels 53 der drehbare Teil 47 des Zylinderschlosses 48 wieder um etwa 90° gedreht werden (siehe Pfeil 41 in Figur 5), so daß die abgeflachte Abwinklung 40 hochschwenkt und den hinteren Anschlagrand 42 des Cassettenfaches 36 wieder freigibt. Die Leercassette 43 kann dann wie jede übliche Cassette entnommen werden und das Gerät ist wieder betriebsbereit.

Bei dem Ausführungsbeispiel nach den Figuren 4 und 5 ist es nicht erforderlich, daß die Leercassette 43 die bei Videocassetten sonst übliche und notwendige Klappe 16 (siehe Figur 3) aufweist. Ist diese Klappe 16 dennoch vorhanden, so ist es notwendig, daß sie eine Aussparung für den Durchtritt des drehbaren Elementes 38 aufweist.

Mit der vorliegenden Erfindung gelingt es mit einfachsten Mitteln eine absolut zuverlässige Sperrung von Videogeräten zu erreichen. Hierbei sind die Maßnahmen der Erfindung sowohl bei sämtlichen bereits vorhandenen Videogeräten einsetzbar und es ist auch möglich neu gestaltete Videogeräte geeignet für den Einsatz einer solchen absperrbaren Leercassette zu gestalten.

Liste der verwendeten Bezugszeichen

1    Videocassette

2    Schale

3    Schale

4    Schraube

5    Stirnseite

6    Stirnseite

7    Längsseite

8    Längsseite

9    Bandöffnung

10   Ausnehmung

11   Stützfläche

12   Spulenkammer

13   Spulenkammer

14   Öffnung

15   Öffnung

16   Klappe

17   Scharnier

18   Klappe

19   Vorsprung

20   Achse

21   Rückholfeder

22   Wand

23   Nocken

24   Nocken

25   Wange

26   Cassettenfach

27   Stößel

28   Schließkanal

29   Schloß

30   hinteres Ende des Schlosses

31   Ausnehmung

32   Zapfen

33  Rückholfeder

34  Nase

35  äußeres Ende des Stößels

36  Cassettenfach

37  Einschubrichtung

38  drehbares Element

39  hinteres Ende

40  Abwinklung

41  Drehbewegung

42  Anschlagrand

43  Videocassette

44  Überstand

45  Aussparung

46  Abtastelemente

47  drehbarer Teil

48  Zylinderschloß

49  stillstehender Teil

50  Videogerät

51  Pfeil

52  Halter

53  Schlüssel

Schutzansprüche

1.  Vorrichtung zum Schutze von Video-Recordern vor
    unbefugter Benutzung, gekennzeichnet durch einen
    in das Cassettenfach (26) des Recorders einführbaren und darin bei mindestens teilweiser
    Öffnungsstellung ver- und entriegelbaren Halter.

2.  Vorrichtung nach Anspruch 1, dadurch gekennzeichnet, daß der Halter wenigstens die äußeren
    Abmessungen und Ausnehmungen einer Videocassette
    (1) sowie eine Verriegelung (27,29) aufweist, die
    am Halter selbst angreift.

3.  Vorrichtung nach Anspruch 1 und 2, dadurch gekennzeichnet, daß der Halter als Videocassette (1)
    ausgebildet ist und eine um die einander entsprechenden Ecken der Stirnseiten (5 und 6) der
    Cassette (1)  vor das über eine Längsseite (8)
    herumgeführte Videoband schwenkbare Klappe (16)
    aufweist, woran die Verriegelung (27) bei mindestens teilweise geöffneter Klappe (16) angreift.

4.  Vorrichtung nach Anspruch 3, dadurch gekennzeichnet, daß die Videocassette (1) eine Leercassette ohne Videoband ist.

5.  Vorrichtung nach Anspruch 4, dadurch gekennzeichnet, daß die Verriegelung (29, 27) in einer
    der Spulenkammern (12,13) der Videocassette (1)
    fest und unlösbar angeordnet ist.

6.  Vorrichtung nach Anspruch 5, dadurch gekennzeichnet, daß die Verriegelung als Stößel (27) ausgebildet ist, dessen inneres Ende (34) in der Verlängerung des Schließkanals (28) eines Schlosses (29) und dessen äußeres Ende (35) in der der Klappe (16) benachbarten Längsseite (8) der Cassette (1) längsverschieblich und in seinen jeweiligen Endstellungen feststellbar geführt ist.

7. Vorrichtung nach Anspruch 6, dadurch gekennzeichnet, daß das Schloß (29) als schlüsselbetätigtes Zylinderschloß ausgebildet ist, dessen Verriegelungskörper mit dem inneren Ende (34) des Stößels (27) fest oder lösbar verbunden ist.

8. Vorrichtung nach Anspruch 7, dadurch gekennzeichnet, daß der Stößel (27) auf einer Rückholfeder (33) abgestützt ist.

9. Vorrichtung nach mindestens dem Gattungsbegriff des Anspruchs 1 mit einem Cassettenfach mit hinterem Anschlagrand für eine Videocassette dadurch gekennzeichnet, daß der Halter mindestens ein in Einschubrichtung (37) verlaufendes, drehbar angeordnetes Element (38) trägt, dessen hinteres Ende (39) abgewinkelt ist, wobei die Abwinklung (40) mit einer Drehbewegung (41) hinter den hinteren Anschlagrand (42) gedreht und mindestens in dieser Stellung verriegelt und entriegelt werden kann.

10. Vorrichtung mindestens nach Anspruch 9 dadurch gekennzeichnet, daß das drehbar angeordnete Element (38) als Stab ausgebildet ist, dessen hinteres Ende (39) abgewinkelt (40) und abgeflacht ist, der mit einem drehbaren Teil (47) eines Zylinderschlosses (48) verbunden ist, dessen stillstehender Teil 49 im Halter angeordnet und von vorne zugänglich ist.

11. Vorrichtung nach mindestens einem der Ansprüche 9 und 10, dadurch gekennzeichnet, daß der Halter im wesentlichen als Videocassette (43) (Leercassette) ausgebildet ist, in welcher mindestens der Stab (38) drehbar, aber axial unverschiebbar gelagert ist, wobei der Stab (38) durch entsprechende Aussparungen vorhandener Bauteile hindurch genügend weit übersteht (44) um mit seinem abgewinkelten Ende (40) hinter den hinteren Anschlagrand (42) des Cassetteneinschubfachs (36) greifen zu können, wobei das Cassettengehäuse (43) die notwendigen Aussparungen (45) aufweist, in welche die den automatischen Einzug bewirkenden Abtastelemente (46) wirkungslos eintauchen können.

-1/2-

Fig. 3

Fig. 2

Fig. 1

-12-

-13-

*Fig 5*

*Fig 4*